(19) Europäisches Patentamt
European Patent Office
Office européen des brevets

(11) **EP 2 405 282 A2**

(12) # EUROPEAN PATENT APPLICATION

(43) Date of publication:
**11.01.2012 Bulletin 2012/02**

(51) Int Cl.:
***G01S 7/491*** (2006.01)     ***G01S 17/32*** (2006.01)

(21) Application number: **11172875.4**

(22) Date of filing: **06.07.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **07.07.2010 JP 2010154550** | (71) Applicant: **Yamatake Corporation**<br>**Tokyo 100-6419 (JP)**<br><br>(72) Inventor: **Ueno, Tatsuya**<br>**Tokyo 100-6419 (JP)**<br><br>(74) Representative: **Kling, Simone**<br>**Lavoix Munich**<br>**Bayerstrasse 85a**<br>**80335 München (DE)** |

(54) **Signal evaluating device and signal evaluating method**

(57) A signal evaluating device comprises: a binarizing portion for binarizing an input signal; a run length measuring portion for measuring the run length of the input signal during the evaluating interval, using the output of the binarizing portion as the input; and evaluating means for calculating, from the measurement results of the run length measuring portion, a distribution wherein the noise frequency distribution included in the input signal during the evaluating interval is assumed to be a geometric distribution, and for evaluating whether or not the input signal is valid through comparing the calculated frequency to the run length frequency obtained from the measurement results by the run length measuring portion (probability calculating portion, noise frequency calculating portion, and validity evaluating portion).

FIG. 1

**Description**

Cross Reference to Related Applications

The present application claims priority to Japanese Patent Application No. 2010-154550, filed July 7, 2010, which is incorporated herein by reference.

Field of Technology

The present invention relates to a signal evaluating device and signal evaluating method for evaluating whether or not an input signal is valid.

Background of the Invention

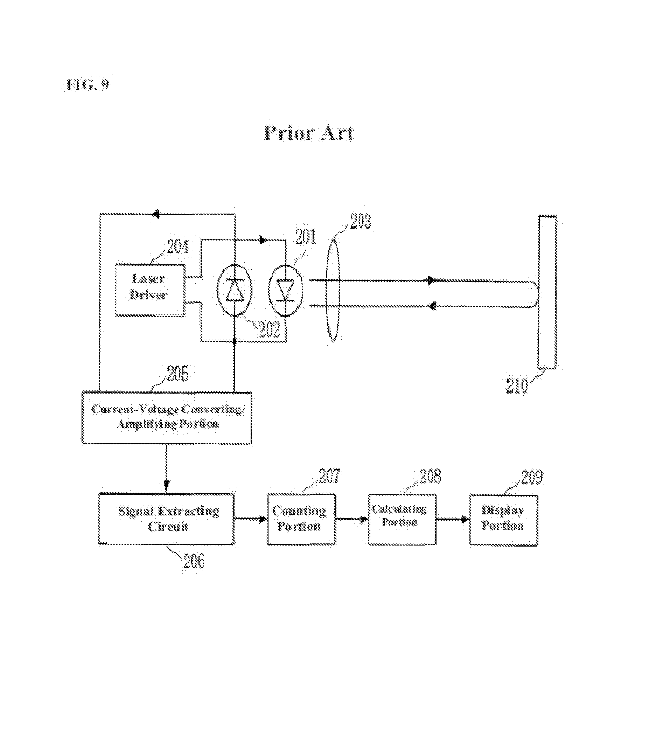

Conventionally, there have been proposals for self-coupling laser sensors that use the self-coupling effect of a semiconductor laser (See Japanese Unexamined Patent Application Publication 2006-313080 ("JP '080")). The structure of the self-coupling laser sensor is illustrated in FIG. 9. The self-coupling laser sensor of FIG. 9 includes a semiconductor laser 201 for emitting a laser beam at an object 210; a photodiode 202 for converting the optical output of the semiconductor laser 201 to an electric signal; a lens 203 for focusing the beam from the semiconductor laser 201 to illuminate the object 210, and to focus the beam returned from the object 210 to cause it to be incident into the semiconductor laser 201; a laser driver 204 for repetitively switching the semiconductor laser 201 between a first oscillating interval wherein the oscillating wavelength increases continuously and a second oscillating interval wherein the oscillating wavelength decreases continuously; a current-voltage converting amplifying portion 205 for converting and amplifying the output current from the photodiode 202 into a voltage; a signal extracting circuit 206 for taking the second derivative of the output voltage of the current-voltage converting amplifying portion 205; a counting device 207 for counting the number of mode-hop pulses (hereinafter termed "MHPs") included in the output voltage of the signal extracting circuit 206; a calculating device 208 for calculating the distance from the object 210 and the speed of the object 210; and a display device 206 for displaying the calculation result by the calculating device 208.

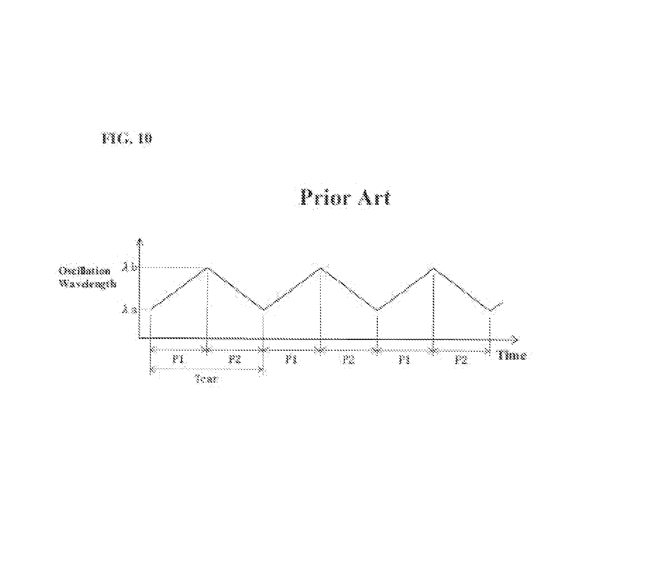

The laser driver 204 provides, as a driving current to the semiconductor laser 201, a triangle wave driving current that repetitively increases and decreases at a constant rate of change in respect to time. As a result, the semiconductor laser 201 is driven so as to repetitively alternate between a first oscillating interval wherein the oscillating wavelength continuously increases at a constant rate of change, and a second oscillating interval wherein the oscillating wavelength is continuously reduced at a constant rate of change. FIG. 10 is a diagram illustrating the changes in the oscillating wavelength of the semiconductor laser 201 over time. In FIG. 10: P1 is the first oscillating interval; P2 is the second oscillating interval; $\lambda a$ is the minimum value for the oscillating wavelength in each interval; $\lambda b$ is the maximum value for the oscillating wavelength in each interval; and Tcar is the period of the triangle wave.

The beam that is emitted from the semiconductor laser 201 is focused by the lens 203 to be incident on the object 210. The beam that is reflected from the object 210 is focused by the lens 203 to be incident into the semiconductor laser 201. The photodiode 202 converts the output of the semiconductor laser 201 into an electric current. The current-voltage converting/amplifying portion 205 converts the output current from the photodiode 202 into a voltage, and then amplifies that voltage, and the signal extracting circuit 206 takes the second derivative of the output voltage of the current-voltage converting/amplifying portion 205. The number of MHPs included in the output voltage of the signal extracting circuit 206 is counted by the signal counting device 207 for the first oscillating interval P1 and for the second oscillating interval P2. The calculating device 208 calculates a physical quantity, such as the distance of the object 210 or the velocity of the object 210 based on the minimum oscillating wavelength $\lambda a$ and the maximum oscillating wavelength $\lambda b$ of the semiconductor laser 1 and the number of MHPs in the first oscillating interval P1 and the number of MHPs in the second oscillating interval P2.

In a self-coupling laser sensor, noise such as scattered light is counted as a signal, even if there is no object in front of the semiconductor laser and even if the object cannot be detected due to being further than the limit of the range of detectability for the object, so that the calculation of the physical quantity is performed as if an object existed in front of the semiconductor laser, and thus it is necessary to evaluate the validity of the signals that are counted.

In MHPs, which are self-coupled signals, the signal components vary depending on the physical quantity and on the signal component, making the evaluation of whether that which is outputted from the signal extracting circuit is noise or a signal difficult, and there has been no known method for evaluating noise versus signals, that is, no easy method for achieving an evaluation of whether or not an inputted signal is valid.

Conventionally, methods have been considered that use frequency analysis, such as fast Fourier transforms (FFT), in evaluating the validity of signals in sensors that calculate physical quantities based on signal frequencies or counts, such as sensors that use the principle of interference, such as self-coupling laser sensors. However, in FFT there is a problem in that the amount of calculation required is large, so the processing is time-consuming.

Note that problems such as described above are not limited to self-coupling laser sensors, but may occur similarly in other devices as well.

The present invention was created in order to solve the problem areas set forth above, and the object thereof is to provide a signal evaluating device and a signal evaluating method able to achieve easily evaluations as to whether or not an inputted signal is valid.

Summary of the Invention

In view of above, a signal evaluating device according to claims 1, 2, 3 and a signal evaluating method according to claims 7, 8, 9 are provided. The signal evaluating device according to the present invention includes binarizing means for binarizing an input signal; run length measuring means for measuring the run length of the sign when there is a change in the sign that is the result of binarization of the input signal during the evaluating interval, using the output of the binarizing means as the input; and evaluating means for calculating, from the measurement results of the run length measuring means, a distribution wherein the noise frequency distribution included in the input signal during the evaluating interval is assumed to be a geometric distribution, and for evaluating whether or not the input signal is valid through comparing the calculated distribution to the run length distribution obtained from the measurement results by the run length measuring means.

Additionally, the signal evaluating device according to the present invention has binarizing means for binarizing an input signal; run length measuring means for measuring the run length of the sign when there is a change in the sign that is the result of binarization of the input signal during the evaluating interval, using the output of the binarizing means as the input; and evaluating means for calculating, from the measurement results of the run length measuring means, a distribution wherein the noise frequency distribution included in the input signal during the evaluating interval is assumed to be a geometric distribution, and for evaluating whether or not the input signal is valid from a proportion of a total frequency of the noise, obtained from the calculated distribution, and a total frequency that is the number of run lengths in the evaluating interval.

Additionally, the signal evaluating device according to the present invention includes binarizing means for binarizing an input signal; run length measuring means for measuring the run length of the sign when there is a change in the sign that is the result of binarization of the input signal during the evaluating interval, using the output of the binarizing means as the input; and evaluating means for calculating, from the measurement results of the run length measuring means, a distribution wherein the noise frequency distribution included in the input signal during the evaluating interval is assumed to be a geometric distribution, and for evaluating whether or not the input signal is valid from a proportion of a total frequency of the noise, obtained from the calculated distribution, and a frequency of the signals calculated from a total frequency that is the number of run lengths in the evaluating interval and from the total frequency of the noise.

Additionally, in one composition example of a signal evaluating device according to the present invention, the evaluating means calculate, for each class, the absolute value of the difference between the noise frequency and the run length frequency during the evaluating interval, and define the sum of the calculated values to be the frequency of the signals.

Additionally, in one composition example of a signal evaluating device according to the present invention, the evaluating means use, as the signal frequency, the sum of only those frequencies that are greater than the noise frequencies for the specific classes, from among the run length frequencies for each of the classes during the evaluating interval.

Additionally, in one composition example of a signal evaluating device according to the present invention the evaluating means calculate a noise frequency distribution from the class 1 frequency obtained from the measurement result by the run length measuring means.

Additionally, a signal evaluating step according to the present invention has a binarizing step for binarizing an input signal; a run length measuring step for measuring the run length of the sign when there is a change in the sign that is the result of binarization of the input signal during the evaluating interval, using the output of the binarizing step as the input; and an evaluating step for calculating, from the measurement results of the run length measuring step, a distribution wherein the noise frequency distribution included in the input signal during the evaluating interval is assumed to be a geometric distribution, and for evaluating whether or not the input signal is valid through comparing the calculated distribution to the run length distribution obtained from the measurement results by the run length measuring step.

Given the present invention, the provision of binarizing means for binarizing an input signal, run length measuring means for measuring the run length of the sign that is the result of binarizing of the input signal during the evaluating interval, using the output of the binarizing means as the input, each time the sign changes; and evaluating means for calculating, from the measurement results of the run length measuring portion, a distribution wherein the noise frequency distribution included in the input signal during the evaluating interval is assumed to be a geometric distribution, and for evaluating whether or not the input signal is valid through comparing the calculated frequency to the run length frequency obtained from the measurement results by the run length measuring portion enables easy evaluation of whether or not an input signal is valid. In the present invention, no frequency analyzing technique, such as FFT, is used, thus making it possible to evaluate in a short period of time and with low calculation overhead, whether or not an input signal is valid.

Additionally, in the present invention, the provision of binarizing means for binarizing an input signal, run length measuring means for measuring the run length of the sign that is the result of binarizing of the input signal during the evaluating interval, using the output of the binarizing means as the input, each time the sign changes; and evaluating means for calculating, from the measurement results of the run length measuring portion, a distribution wherein the noise frequency distribution included in the input signal during the evaluating interval is assumed to be a geometric distribution, and for evaluating whether or not the input signal is valid from a ratio of the noise total frequency, obtained from the calculated distribution, and the total frequency, which is the number of run lengths in the evaluating interval, enables easy evaluation of whether or not an input signal is valid.

Additionally, in the present invention, the provision of binarizing means for binarizing an input signal, run length measuring means for measuring the run length of the sign that is the result of binarizing of the input signal during the evaluating interval, using the output of the binarizing means as the input, each time the sign changes; and evaluating means for calculating, from the measurement results of the run length measuring portion, a distribution wherein the noise frequency distribution included in the input signal during the evaluating interval is assumed to be a geometric distribution, and for evaluating whether or not the input signal is valid from a ratio of the noise total frequency, obtained from the calculated distribution, and a signal frequency that is calculated from a total frequency, which is the number of run lengths in the evaluating interval, and the noise total frequency, enables easy evaluation of whether or not an input signal is valid.

According to an embodiment, a signal-evaluating device is provided, comprising a binarizing portion for binarizing an input signal; a run length measuring portion for measuring the run length of the input signal during the evaluating interval, using the output of the binarizing portion as the input; and evaluating means for calculating, from the measurement results of the run length measuring portion, a distribution wherein the noise frequency distribution included in the input signal during the evaluating interval is assumed to be a geometric distribution, and for evaluating whether or not the input signal is valid through comparing the calculated frequency to the run length frequency obtained from the measurement results by the run length measuring portion (probability calculating portion, noise frequency calculating portion, and validity evaluating portion).

Further advantages, features, aspects and details are evident from the dependent claims, the description and the drawings.

Brief Description of the Drawings

The accompanying drawings relate to embodiments of the invention and are described in the following:

FIG. 1 is a block diagram illustrating a structure of a self-coupled laser sensor according to an example of the present invention.
FIG. 2 is a waveform diagram illustrating schematically the output voltage waveform of the current/voltage converging amplifying portion and the output voltage waveform of the filter portion according to the present invention.
FIG. 3 is a block diagram illustrating a structure of a signal evaluating device in a self-coupled laser sensor according to the present invention.
FIG. 4 is a flowchart illustrating the operation of a signal evaluating device in a self-coupled laser sensor according to an example of the present invention.
FIG. 5 is a diagram for explaining the operation of a binarizing portion and a run length measuring portion in a self-coupled laser sensor according to an example of the present invention.
FIG. 6 is a diagram illustrating an example of a run length frequency distribution in a non-signal state.
FIG. 7 is a diagram for explaining regarding the probability that the sign will change and the probability that the sum will not change after binarization.
FIG. 8 is a diagram for explaining the effects of a signal evaluating device in a self-coupled laser sensor according to an example of the present invention.
FIG. 9 is a block diagram illustrating the structure of a conventional self-coupling laser sensor.
FIG. 10 is a diagram illustrating one example of change over time in the oscillating wavelength of the semiconductor laser in the self-coupling laser sensor of FIG. 9.

Detailed Description of the Invention

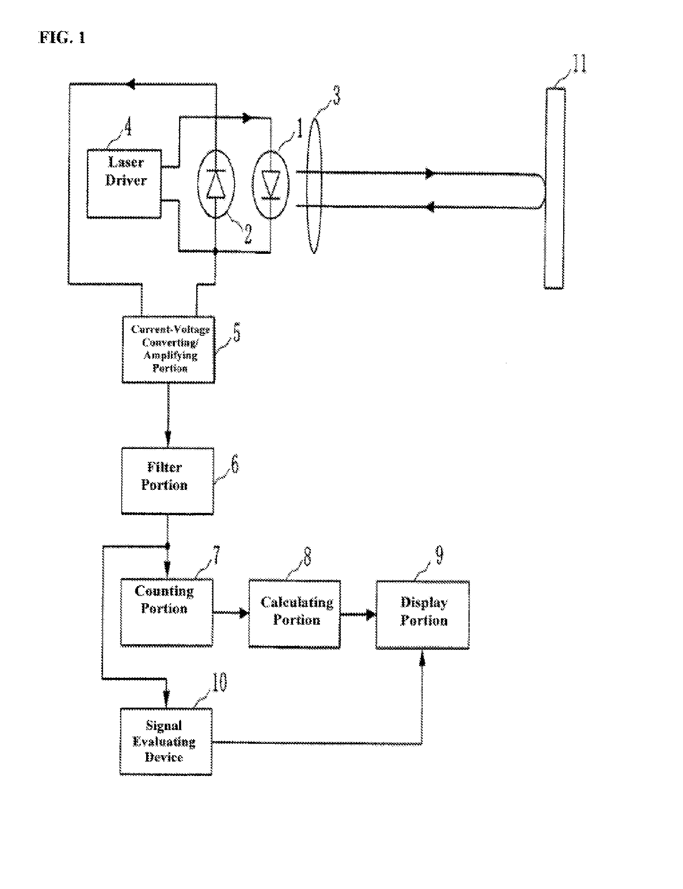

Forms for carrying out the present invention is explained below in reference to the figures. FIG. 1 is a block diagram illustrating a structure of a self-coupled laser sensor according to an example.

The self-coupling laser sensor in FIG. 1 includes a semiconductor laser 1 for emitting a laser beam at a object 11 that is the subject of the measurement; a photodiode 2 for converting the optical power of the semiconductor laser 1 into an electric signal; a lens 3 for focusing and emitting light from the semiconductor laser 1, and for focusing and injecting into the semiconductor laser 1 the return light from the object 11; a laser driver 4 that serves as oscillating wavelength modulating means for driving the semiconductor laser 1; a current-voltage converting/amplifying portion 5 for converting the output current from the photodiode 2 into a voltage and for amplifying that voltage; a filter portion 6 for eliminating the carrier wave from the output voltage of the current-voltage converting/amplifying portion 5; a counting portion 7 for counting the number of MHPs that are the self-coupled signals that are included in the output voltage of the filter portion 6; a calculating portion 8 for calculating the distance from the object 11 and the velocity of the object 11 based on the number of MHPs; a display portion 9 for displaying the calculation result by the calculating portion 8, and a signal evaluating device 10 for evaluating whether or not the output of the filter portion 6 is a valid input signal.

For ease in the explanation, it shall be envisioned below that the semiconductor laser 1 that is used is not of the type that has a mode-hopping phenomenon (the VCSEL type or the DFB laser type).

The laser driver 4 provides, as a driving current to the semiconductor laser 1, a triangle wave driving current that repetitively increases and decreases at a constant rate of change in respect to time. As a result, the semiconductor laser 1 is driven so as to repetitively alternate between a first oscillating interval P1 wherein the oscillating wavelength continuously increases at a constant rate of change, and a second oscillating interval P2 wherein the oscillating wavelength is continuously reduced at a constant rate of change, proportional to the magnitude of the injection current. The change in the oscillating wavelength of the semiconductor laser 1 at this time is as illustrated in FIG. 10. In the present example, the maximum value $\lambda b$ of the oscillating wavelength and the minimum value $\lambda a$ of the oscillating wavelength are both always constant, so the difference $\lambda b - \lambda a$ thereof is also always a constant.

The beam that is emitted from the semiconductor laser 1 is focused by the lens 3 to be incident on the object 11. The beam that is reflected from the object 11 is focused by the lens 3 to be incident into the semiconductor laser 1. Note that the focusing by the lens 3 is not absolutely necessary. The photodiode 2 is disposed within or in the vicinity of the semiconductor laser 1, and converts the optical power from the semiconductor laser 1 into an electric current. The current-voltage converting/amplifying portion 5 converts the output current from the photodiode 2 into a voltage, and then amplifies that voltage.

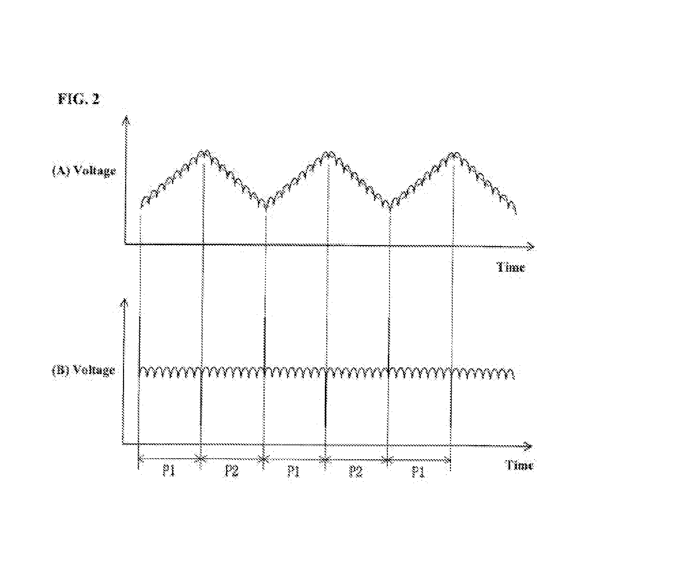

The filter portion 6 has the function of extracting a superimposed signal from a modulated wave. FIG. 2 (A) is a diagram illustrating schematically the output voltage waveform of the current-voltage converting/amplifying portion 5, and FIG. 2(B) is a diagram illustrating schematically the output voltage waveform of the filter portion 6. These diagrams illustrate the progression of the waveform (the modulated wave) of FIG. 2(A), which corresponds to the output of the photodiode 2, to the removal of the emitted waveform (the carrier wave) from the semiconductor laser 1 in FIG. 10, to the extraction of the MHP waveform (the interference waveform) of FIG. 2(B). MHPs, which are the self-coupled signals that are produced through the self-coupling effect between the laser beam that is emitted from the semiconductor laser 1 and the beam that is returned from the object 11, are explained in, for example, JP '080, and thus detailed explanations thereof will be omitted here.

The number of MHPs included in the output voltage of the filter portion 6 is counted by the counting portion 7 for the first oscillating interval P1 and for the second oscillating interval P2. The counting portion 7 may use a counter that is structured from logical gates, or may use other means.

The calculating portion 8 calculates the distance to the object 11 and the velocity of the object 11 based on the minimum oscillating wavelength $\lambda a$ and the maximum oscillating wavelength $\lambda b$ of the semiconductor laser 1, and the number of MHPs counted by the calculating portion 7. The method for calculating the distance to the object 11 and the velocity of the object 11 is disclosed in, for example, JP '080, and thus detailed explanations thereof will be omitted here. Note that there is no limitation on the physical quantity measured by the present invention. For example, an oscillation frequency of an object may be calculated based on the number of MHPs, as disclosed in Japanese Unexamined Patent Application Publication 2010-78560, or an oscillation amplitude of an object may be calculated based on the number of MHPs, as disclosed in Japanese Unexamined Patent Application Publication 2010-78393. The display portion 9 may display the calculation results by the calculating portion 8.

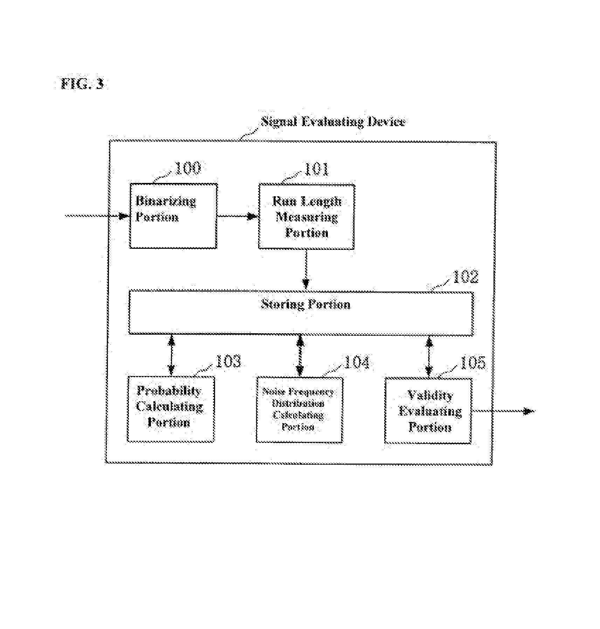

Following this, the signal evaluating device 10 evaluates whether or not the output of the filter portion 6 is a valid input signal. FIG. 3 is a block diagram illustrating one configuration of a signal evaluating device 10. The signal evaluating device 10 includes a binarizing portion 100; a run length measuring portion 101; a storing portion 102, a probability calculating portion 103, a noise frequency distribution calculating portion 104, and a validity evaluating portion 105. The probability calculating portion 103, the noise frequency distribution calculating portion 104, and the validity evaluating portion 105 comprise the evaluating means.

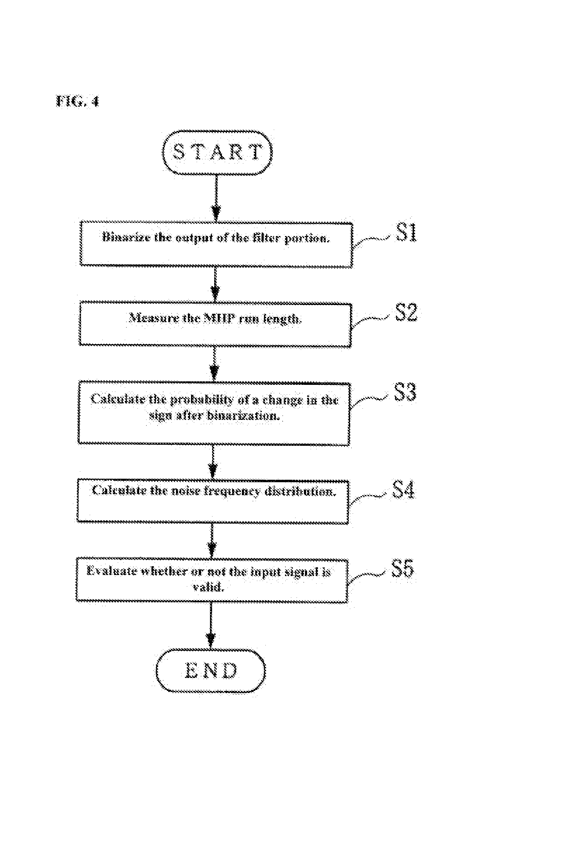

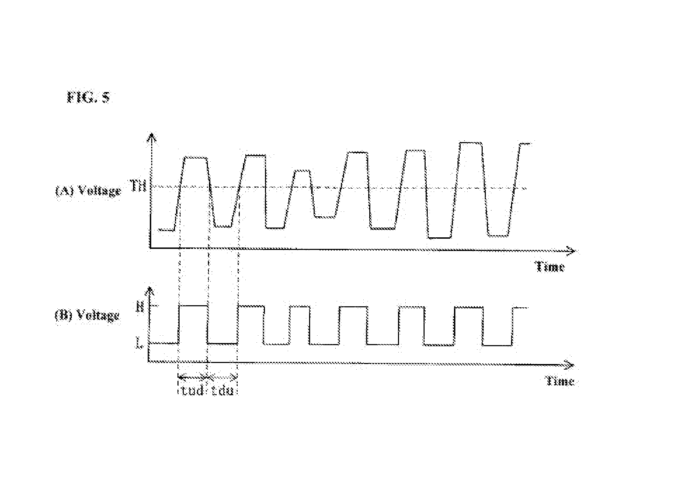

FIG. 4 is a flowchart illustrating the operation of the signal evaluating device 10. FIG. 5(A) and FIG. 5 (B) are diagrams for explaining the operation of the binarizing portion 100 and the run length measuring portion 101, where FIG. 5 (A) is a diagram illustrating schematically the waveform of the output voltage of the filter portion 6, that is, the waveform of the MHPs, and FIG. 5 (B) is a diagram illustrating the output of a binarizing portion 100, corresponding to FIG. 5 (A).

First the binarizing portion 100 of the signal evaluating device 10 evaluates whether the output voltage of the filter portion 6 illustrated in FIG. 5 (A) is at the high level (H) or at the low level (L), and outputs the evaluation results as illustrated in FIG. 5 (B). At this time, the binarizing portion 100 evaluates at the high level when the output voltage from the filter portion 6 rises to be at or above a threshold value TH1, and evaluates at the low level if the output voltage of the filter portion 6 falls to be below a threshold value TH2 (wherein TH2 <TH1), to binarize the output of the filter portion 6 (Step S1 in FIG. 4).

Following this, the run length measuring portion 101 measures the run length of the MHPs during the evaluating interval for evaluating whether or not the input signal is valid (Step S2 in FIG. 4). Here, in the present example, the first oscillating interval P1 and the second oscillating interval P2 are separate oscillating intervals for the counting portion 7 to count the number of MHPs. The run length measuring portion 101 measures the time tud from the rising edge to the next falling edge of the output of the binarizing portion 100, as illustrated in FIG. 5 (B), and measures the time tdu from the falling edge to the next rising edge of the output of the binarizing portion 100, to measure the run length of the output of the binarizing portion 100 (that is, the run length of the MHP). In this way, the run length of the MHP is the time tud or tdu. In the run length measuring portion 101 the measurement, such as described above, is performed each time either a rising edge or a falling edge of the binarizing portion 100 is detected during the evaluating interval.

Note that the run length measuring portion 101 measures the run length of the MHP in units of cycles of a sampling clock. For example if the run length of the MHP is twice the sampling clock, then the magnitude of the run length is 2 (samplings). The frequency of the sampling clock is adequately high relative to the maximum frequency that may be assumed by the MHPs. The storing portion 102 stores the measurement result of the run length measuring portion 101.

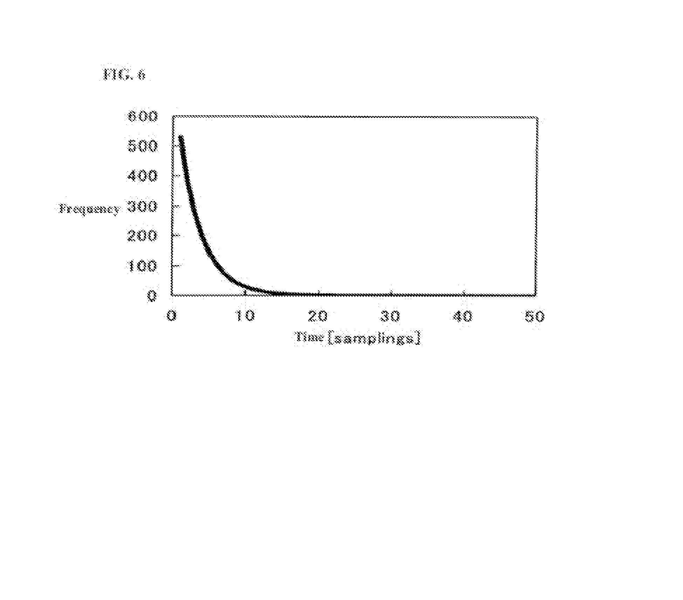

Following this, the probability calculating portion 103 calculates the probability p that the sign after binarization will change (Step S3 in FIG. 4). An example of the frequency distribution of the run lengths that are measured by the run length measuring portion if not an MHP (if there is no object 11 in front of the semiconductor laser 1, or if the object 11 is too far away, outside of the detectable range, so as to not be detected), that is, if in a non-signal state, is shown in FIG. 6. The run length frequency distribution in the non-signal state follows a geometric distribution $F_{edge}$ (x) according to Equation (1), because it follows Bernoulli's theory, which is the probability theory of discrete time.

$$F_{edge}(x) = p \cdot (1 - p)^{x-1} \dots (1)$$

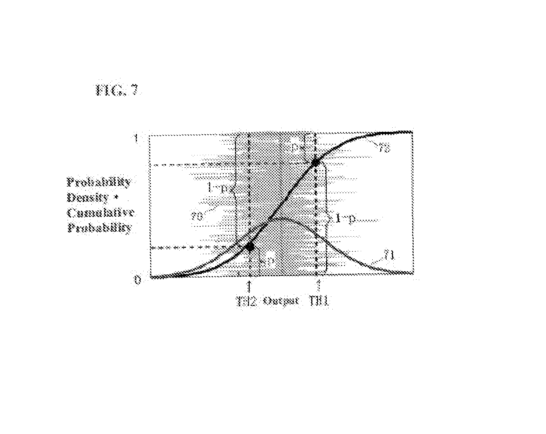

Equation (1) is explained below. In discrete time probability theory, the probability of success/failure can be expressed as a series of Bernoulli trials that have no time dependency. If there is no MHP, then that which is outputted from the filter portion 6 can be defined as white noise that has no time dependency. When white noise is binarized and the average value of the white noise is essentially equal to the center between the threshold values for TH1 and TH2, then, as illustrated in FIG. 7, if the probability of a transition in the sign after authorization from a low level to a high level or a high level to a low level is defined as p, then the probability that there will be no change in sign can be defined as 1 - p. The case wherein the sign after binarization changes shall be termed "success" and the case wherein there is no change in sign shall be termed "failure." The horizontal axis in FIG. 7 is the output of the filter portion 6, where 70 represents white noise, 71 represents the probability density, and 72 represents the cumulative probability. The probability that the same sign will continue x times is the probability of x -1 failures and 1 successes, and thus can be expressed by Equation (1), above.

The probability p that the sign after binarization will change can be calculated from the relationship in Equation (1). When the frequency of class 1 (samplings) is defined as N1 and the total number of sampling clocks during the evaluating interval is defined as Nsamp, the probability p that the sign after binarization will change can be calculated as in the following equation:

$$p = \sqrt{(N1/Nsamp)} = (N1/Nsamp)^{1/2} \dots (2)$$

The probability calculating portion 103 may calculate the frequency N1 of the class 1 (samplings) during the evaluating interval from the measurement results by the run length measuring portion 101, which are stored in the storing portion 102, and may calculate the probability p of a change in sign after binarization from Equation (2) using this frequency N1 and the total number of sampling clocks Nsamp during the evaluating interval. The calculation of results by the probability calculating portion 103 are stored in the storing portion 102.

Following this, the noise frequency distribution calculating portion 104 calculates the noise frequency distribution (Step S4 in FIG. 4). From the relationship in Equation (1), the noise frequency N (n) of class n (samplings) during the evaluating interval can be calculated as in the following equation:

$$N\,(n) = Nsamp \cdot p^2 \cdot (1 - p)^{\,n-1} \ldots (3)$$

Note that the total frequency of the noise $\Sigma$ N (n) at this time is Nsamp $\cdot$ p.

The noise frequency distribution calculating portion 104 calculates the frequency N (n) of the noise for the class n (samplings) during the evaluating interval from the measurement results by the run length measuring portion 101, stored in the storing portion 102. The noise frequency distribution calculating portion 104 performs this calculation for the frequency N (n) for each of the classes from class 1 through the maximum class (the maximum period in the measurement results by the run length measuring portion 101).

The validity evaluating portion 105 evaluates whether or not the input signal is valid, from the ratio R of the signal frequency and the noise frequency (Step S5 in FIG. 4). Specifically, the validity evaluating portion 105 calculates the ratio R as in the following equation:

$$R = \{\Sigma N - \Sigma N\,(n)\} \,/\, \Sigma N\,(n) \ldots (4)$$

In Equation (4), the $\Sigma N$ is the total frequency during the evaluating interval (the number of run lengths in the evaluating interval).

The validity evaluating portion 105 evaluates that signals (MHPs) that are included in the output of the filter portion 6 are invalid if the calculated ratio R is less than or equal to a specific evaluation threshold value, but if this ratio R exceeds the evaluation threshold value, then it evaluates that the signals (MHPs) included in the output of the filter portion 6 are valid.

The signal evaluating device 10 performs processes such as described above with each evaluating interval. The display portion 9 displays the evaluation results by the signal evaluating device 10.

As described above, in the present example an evaluation of whether or not an input signal is valid can be performed from the ratio R of the signal frequency and the noise frequency, based on the probability p that the sign after binarization will change.

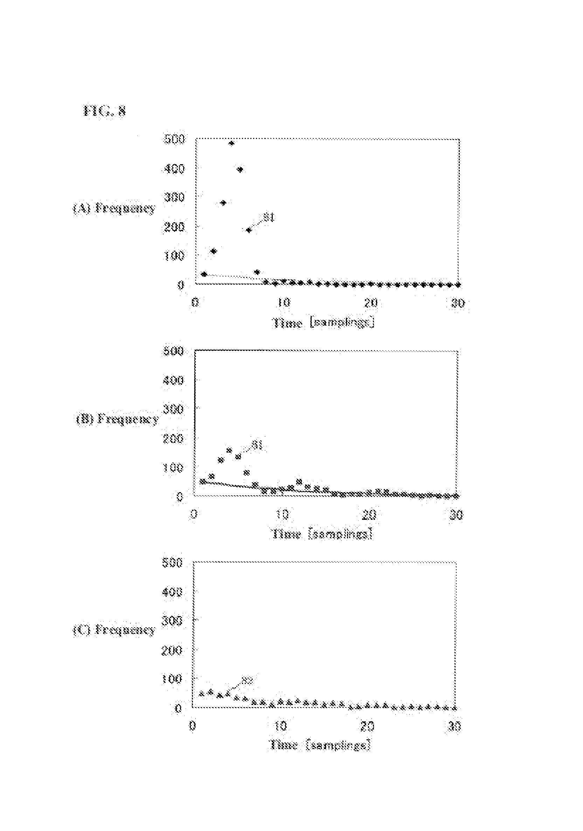

FIG. 8 (A) through FIG. 8 (C) are diagrams for explaining the effects of the signal evaluating device 10 in the present example, diagrams showing an example of the frequency distribution of the run lengths measured by the run length measuring portion 101. In FIG. 8 (A) shows a frequency distribution 80 when the output of the filter portion 6 is in the non-signal state; FIG. 8 (B) shows a frequency distribution 81 when the signal included in the output of the filter portion 6 is valid and there is little noise; and FIG. 8 (C) shows a frequency distribution 82 when the output of the filter portion 6 is a non-signal state.

In the processing by the signal evaluating device 10 in the present example, the ratio R obtained from the run length frequency distribution 82 is 0.029, the ratio R obtained from the run length frequency distribution 80 is 0.719, and the ratio R obtained from the run length frequency distribution 81 is 0.402. Consequently, if the threshold value is set between 0.029 and 0.402, then it is possible to discriminate between a non-signal state and a state wherein the signal is valid. The evaluation threshold value should be set in accordance with the reliability required in the signal.

Note that while in the present example an evaluation is made as to whether or not the input signal is valid based on the ratio R of the signal frequency to the noise frequency, there is no limitation thereto, but rather the evaluating means may evaluate whether or not the input signal is valid based on the proportion $\Sigma N(n)/\Sigma N$ of the total frequency $\Sigma N (n)$ for the noise and the total frequency $\Sigma N$ during the evaluating interval. The evaluating means evaluate that signals (MHPs) that are included in the output of the filter portion 6 are invalid if the proportion $\Sigma N(n)/\Sigma N$ is greater than or equal to a specific evaluation threshold value, but if this proportion $\Sigma N(n)/\Sigma N$ less than the evaluation threshold value, then it evaluates that the signals (MHPs) included in the output of the filter portion 6 are valid.

Additionally, while in the present example the signal frequency during the evaluating interval is calculated as $\Sigma N - \Sigma N(n)$, there is no limitation thereto, and the calculation may be through a different method. Specifically, the validity evaluating portion 105 may calculate the signal frequency through $\Sigma (| N - N(n) |)$. Here N is the frequency of the run lengths of class n. That is, the absolute value of the difference between the run length frequency N and the noise frequency N (n) may be calculated for each class from class 1 through the maximum class, and the sum of the calculated values may be used as the signal frequency. Additionally, the validity evaluating portion 105 may use as the signal frequency the sum of only those frequencies that are greater than the noise frequencies for the specific class, from among the run length frequencies for each of the classes. Moreover, a sum may be used wherein there is a limitation to only a portion of the bins in the frequency distribution, rather than all of the frequencies.

Note that while in the example the explanation was for a case wherein the signal evaluating device according to the present invention is applied to a self-coupling laser sensor, there is no limitation thereto, but rather the signal evaluating device according to the present invention can be applied also to other fields.

Additionally, the calculating portion 8 and the signal evaluating device 10 may be achieved through, for example, a computer that is provided with a CPU, a storage device, and an interface, and through a program that controls these hardware resources. The program for operating such a computer is provided in a state that is stored on a storage medium such as a floppy disk, a CD-ROM, a DVD-ROM, a memory card, or the like. A CPU writes to a storage device a program that has been read, to thereby achieve the processes described in the examples following the program.

The present invention can be applied to a technology for evaluating whether or not an input signal is valid.

**Claims**

1. A signal evaluating device (10) comprising:

   a binarizing device (100) binarizing an input signal;
   a run length measuring device (101) measuring a run length of a sign when there is a change in the sign that is the result of binarization of the input signal during an evaluating interval, using an output of the binarizing device as input; and
   an evaluating device (10) calculating, from a measurement results of the run length measuring device, a distribution wherein a noise frequency distribution included in the input signal during the evaluating interval is assumed to be a geometric distribution, and evaluating whether or not the input signal is valid through comparing the calculated distribution to the run length distribution obtained from the measurement results by the run length measuring device.

2. A signal evaluating device comprising:

   a binarizing device (100) binarizing an input signal;
   a run length measuring device (101) measuring a run length of a sign when there is a change in the sign that is the result of binarization of the input signal during an evaluating interval, using an output of the binarizing device as input; and
   an evaluating device (10) calculating, from a measurement results of the run length measuring device, a distribution wherein a noise frequency distribution included in the input signal during the evaluating interval is assumed to be a geometric distribution, and evaluating whether or not the input signal is valid from a proportion of a total frequency of noise, obtained from the calculated distribution, and a total frequency that is the number of run lengths in the evaluating interval.

3. A signal evaluating device comprising:

   a binarizing device (100) binarizing an input signal;
   a run length measuring device (101) measuring a run length of a sign when there is a change in the sign that is the result of binarization of the input signal during an evaluating interval, using an output of the binarizing device as input; and
   an evaluating device (10) calculating, from measurement results of the run length measuring device, a distribution wherein a noise frequency distribution included in the input signal during the evaluating interval is assumed to be a geometric distribution, and evaluating whether or not the input signal is valid from a proportion of a total frequency of noise, obtained from the calculated distribution, and a frequency of signals calculated from a total frequency that is a number of run lengths in the evaluating interval and from the total frequency of the noise.

4. The signal evaluating device as set forth in Claim 3, wherein:

   the evaluating device calculates, for each class, an absolute value of a difference between the noise frequency and the run length frequency during the evaluating interval, and defines the sum of the calculated values to be the frequency of the signals.

5. The signal evaluating device as set forth in Claim 3 or 4, wherein:

the evaluating device uses, as the signal frequency, a sum of only those frequencies that are greater than the noise frequencies for specific classes, from among the run length frequencies for each of the classes during the evaluating interval.

6. The signal evaluating device as set forth in any of the Claims 1 to 5, wherein:

the evaluating device calculates a noise frequency distribution from a class 1 frequency obtained from the measurement result by the run length measuring device.

7. A signal evaluating method comprising the steps of:

binarizing an input signal;
measuring a run length of a sign when there is a change in the sign that is the result of binarization of the input signal during an evaluating interval, using an output of the binarizing step as input; and
calculating, from measurement results of the run length measuring step, a distribution wherein a noise frequency distribution included in the input signal during the evaluating interval is assumed to be a geometric distribution, and evaluating whether or not the input signal is valid through comparing the calculated distribution to the run length distribution obtained from the measurement results by the run length measuring step.

8. A signal evaluating method comprising the steps of:

binarizing an input signal;
measuring a run length of a sign when there is a change in the sign that is the result of binarization of the input signal during an evaluating interval, using an output of the binarizing step as input; and
calculating, from measurement results of the run length measuring step, a distribution wherein a noise frequency distribution included in the input signal during an evaluating interval is assumed to be a geometric distribution, and evaluating whether or not the input signal is valid from a proportion of a total frequency of noise, obtained from the calculated distribution, and a total frequency that is a number of run lengths in the evaluating interval.

9. A signal evaluating method comprising the steps of:

binarizing an input signal;
measuring a run length of a sign when there is a change in the sign that is the result of binarization of the input signal during an evaluating interval, using an output of the binarizing step as input; and
calculating, from measurement results of the run length measuring step, a distribution wherein a noise frequency distribution included in the input signal during the evaluating interval is assumed to be a geometric distribution, and evaluating whether or not the input signal is valid from a proportion of a total frequency of the noise, obtained from the calculated distribution, and a frequency of the signals calculated from a total frequency that is a number of run lengths in the evaluating interval and from a total frequency of the noise.

10. The signal evaluating method as set forth in Claim 9, wherein:

the calculating step calculates, for each class, an absolute value of a difference between the noise frequency and the run length frequency during the evaluating interval, and defines a sum of the calculated values to be the frequency of the signals.

11. The signal evaluating method as set forth in Claim 9 or 10, wherein:

the calculating step using, as the signal frequency, a sum of only those frequencies that are greater than the noise frequencies for specific classes, from among the run length frequencies for each class during the evaluating interval.

12. The signal evaluating method as set forth in any of the Claims 7 to 11, wherein:

the calculating step calculates a noise frequency distribution from the class frequency obtained from a measurement result by the run length measuring step.

13. The signal evaluating device as set forth in Claim 2, wherein:

the evaluating device calculates a noise frequency distribution from a class 1 frequency obtained from the measurement result by the run length measuring device.

14. The signal evaluating device as set forth in Claim 3, wherein:

the evaluating device calculates a noise frequency distribution from a class 1 frequency obtained from the measurement result by the run length measuring device.

FIG. 1

FIG. 2

(A) Voltage

Time

(B) Voltage

P1   P2   P1   P2   P1

Time

FIG. 3

Signal Evaluating Device

**100** Binarizing Portion

**101** Run Length Measuring Portion

**102** Storing Portion

**103** Probability Calculating Portion

**104** Noise Frequency Distribution Calculating Portion

**105** Validity Evaluating Portion

FIG. 4

START

S1 — Binarize the output of the filter portion.

S2 — Measure the MHP run length.

S3 — Calculate the probability of a change in the sign after binarization.

S4 — Calculate the noise frequency distribution.

S5 — Evaluate whether or not the input signal is valid.

END

FIG. 5

FIG. 6

FIG. 7

FIG. 8

FIG. 9

Prior Art

FIG. 10

Prior Art

**REFERENCES CITED IN THE DESCRIPTION**

**Patent documents cited in the description**

- JP 2010154550 A
- JP 2006313080 A
- JP 2010078560 A
- JP 2010078393 A